(19) **Europäisches Patentamt / European Patent Office / Office européen des brevets**

(11) **EP 2 782 215 A1**

(12) # EUROPEAN PATENT APPLICATION
published in accordance with Art. 153(4) EPC

(43) Date of publication:
**24.09.2014 Bulletin 2014/39**

(21) Application number: **11875916.6**

(22) Date of filing: **16.11.2011**

(51) Int Cl.:
*H02K 1/18* (2006.01)    *H02K 17/30* (2006.01)
*H02K 1/16* (2006.01)

(86) International application number:
**PCT/ES2011/070787**

(87) International publication number:
**WO 2013/072531 (23.05.2013 Gazette 2013/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **For Optimal Renewable Energy Systems S.L.**
**50430 Zaragoza (ES)**

(72) Inventors:
• **GARCIA GRACIA, Miguel**
  **E-50430 Zaragoza (ES)**
• **COVA ACOSTA, Miguel Angel**
  **E-50430 Zaragoza (ES)**
• **VILLEN MARTINEZ, Maria teresa**
  **E-50430 Zaragoza (ES)**
• **LETOSA FLETA, Jesus**
  **E-50430 Zaragoza (ES)**
• **LÓPEZ ANDÍA, Diego**
  **E-50430 Zaragoza (ES)**

(74) Representative: **Schäfer, Matthias W.**
  **Patentanwalt**
  **Schwanseestrasse 43**
  **81549 München (DE)**

(54) **RETRACTABLE MODULAR STATOR FOR AN ELECTRIC MOTOR/GENERATOR**

(57)    Design of a retractable modular stator for an electric motor/generator, formed by one or several modules that are moveable in a radial direction or any other direction that allows the separation between the rotor and the stator of the electric machine to be modified. Each module of the stator is formed by several windings, teeth, slots and a corresponding yoke section.

The invention presented affords the main advantage of attaining a reduction in the magnetic losses in the ferromagnetic core that occur frequently in electric motors or generators while operating in standby mode. Furthermore it allows other losses associated with electric machines, such as friction losses and heating losses to be reduced.

**Figure -1-**

## Description

The present description relates, as its title indicates, to a retractable modular stator for an electric motor/generator. It comprises one or several modules that are moveable in a radial direction or in any other possible direction. Each module of the stator consists of several windings, teeth, slots and its corresponding yoke section. The retractable modular stator allows the losses associated with the functioning of an electric motor/generator, in particular, when it is operating in standby mode, to be reduced.

## Field of the invention

The invention relates to the field of the stators of electric motors or generators. More specifically, the invention relates to the design of high-speed generators for flywheel applications, with a significant reduction in losses by functioning with no load or with a partial load.

## The Prior Art

The known manufacturing methods for segmented stator cores and some of the proposed topologies and methods used are indicated below. There are several published patents and scientific documents relating to this type of modular machines, with different properties in each specific case.

In US patent 6288470 B1 *"Modular Motor Construction"* we find a description of a modular stator for its use in an electric motor. This modular stator includes a series of sections and connectors. The stator sections have conductors extending throughout the structure with exposed terminal ends. These terminal ends have corresponding conductive elements with receptacles to connect with other terminal ends. The stator may thus be assembled in a variety of lengths by correctly connecting the modular components but it does not allow any type of reduction in the magnetic losses of the stator.

In US patent 2004/0160141 A1 *"Electric Motor with Modular Stator Ring and Improved Heat Dissipation",* a stator of an electric motor is developed, which is formed by several sections of insulated ferromagnetic material. Each one of the stator sections has an arcuate section formed by a series of radially-projecting teeth. The stator sections are adapted to be connected end to end by a stator core to form a complete stator ring. Although this type of assembly makes its manufacturing process more flexible, it does not involve any type of reduction in the magnetic losses of the stator.

Also to be found is a construction of a generator with multiple similar modules in PCT WO 2011/109659 A1 *"Modular Electric Generator For Variable Speed Turbines".* Each generator module has a part of the rotor configured to generate a magnetic field that changes in relation to the rotational speed of the rotor. The electrical current generated is controlled by the modular part of the stator, so it allows the rotational speed of the rotor and turbine to be magnetically controlled. The gap between the rotor and each stator module is maintained magnetically. This type of topology does not involve any reduction in the magnetic losses of the stator either.

In PCT WO 2011/033370 A1 *"Permanent Magnet Generator"* a configuration for a double-sided rotor, radial flux, air-cored permanent magnet electric generator is disclosed. The generator consists of two radially separated rotor portions, each having a series of permanent magnets with changed polarity, arranged on their inner surface. In the air gap a modular stator is placed, being formed by a base with formations of projecting poles on its surface. Each stator module has additional projecting poles for the connection to the base and includes at least one non-overlapping compact coil that is inserted inside the structure. This construction does not allow any type of reduction in the magnetic losses of the stator.

In "Modular Stator Structure Permanent Magnet Synchronous Machine" - World Automation Congress, 2008 (Y. Chen; Z. Du; W. Zhong; L. Kong) a type of three-phase permanent magnet synchronous machine with modular stator structure is proposed. The width of the machine's teeth is equal to the pole pitch; the stator winding is carried out with concentrated winding, each phase being continuously wound with the following one and the coil ends are shorter than in conventional machines. Thus, the machine is more efficient and the mass is reduced proportionally, although there is no reduction in the magnetic losses of the stator.

Finally, in A Novel Design Of Modular Three-Phase Permanent Magnet Vernier Machine Witch Consequent Pole Rotor" - IEEE Transactions On Magnetics vol: 47; pages: 4215 - 4218 (S. Chung; Ji-Won Kim; Byung-ChulWoo; Do-Kwan Hong; Ji-Young Lee; Dae-HyunKoo), the design of a permanent magnet Vernier type machine (PMVM) is proposed, that comprises a stator and a consequent pole rotor. The proposed design affords advantages such as the following ones: the rotor structure is of a consequent pole topology, which reduces the number of permanent magnets needed and, possibly, the total amount of magnetic material required. The rotor structure with consequent poles takes advantages of reluctance torque and thus increases torque density. The stator may be mechanically separated for specific applications given the modular structure of the magnetic stator that decouples each phase. The modular structure of the stator also eliminates magnetic imbalances caused by the consequent pole rotor, but it does not offer any advantage that is intrinsically associated with the magnetic losses of the stator.

## Background of the invention

Electric motors and generators are devices that convert kinetic energy into electrical energy and vice versa. The underlying principle of this device is Faraday's law, which establishes that any variation in the magnetic flux through a coil induces an electromotive force in the terminals of said conductor.

An electric generator or motor in its simplest form consists of a rotor and a stator. The rotor is the rotating part of the motor/generator and the stator is the fixed part.

The fixed elements are the stator and the coils, whilst the rotating elements are the rotor and the source of the magnetic field. This magnetic field can be created in different ways, for example, by means of the use of permanent magnets.

A particular kind of electric generator or motor is that which has permanent magnets positioned on the rotor or on the stator, as the case may be, to establish a magnetic field in the motor/generator. These machines are known as permanent magnet machines. Coils of a conducting material (normally copper wire) are fixed either on the stator or on the rotor of the motor/generator, and the rotor rotates in relation to the stator. The relative movement of the magnetic field in relation to the conducting coils induces a current in the windings, converting kinetic energy into electrical energy.

Traditionally, the rotor and stator are made of consecutive laminations of ferromagnetic material of high magnetic permeability. The laminations are insulated from each other in order to reduce eddy currents and magnetic losses that occur when they are operating.

In an electric system, demand for electricity is subject to considerable hourly, daily and seasonal variations. Furthermore, renewable energy production is subject to considerable variability. Energy storage allows to decouple electricity generation and demand, enabling this inherently intermittent character to be reduced. Energy storage devices are needed to achieve high penetration of renewable energies. Furthermore, energy storage may improve existing infrastructures and enhance the quality and reliability of grid energy.

A flywheel is a totally passive element that merely provides the system with additional inertia, which allows it to store kinetic energy. The flywheel continues moving when the motor toque that propels it stops. In this way the flywheel opposes sudden accelerations in rotational movement. Thus, fluctuations in angular speed are reduced. That is to say, the flywheel is used to smooth out the flow of energy between an energy source and its load.

Flywheels have three predominant uses:

• Providing continuous energy when the energy source is not reliable. For example, flywheels are used in backup or emergency motors since the energy source is not continuously available.

• Meeting demand peaks that are higher than the rated capacity of the energy source. This is achieved by storing energy in the flywheel for a certain period of time and then releasing the energy quickly, in a proportion that is higher than the capacity of the energy source itself.

• Controlling the orientation of a mechanical system. In these applications, when energy is transferred towards or from the flywheel, the angular momentum that the flywheel contains is transferred towards or from a load.

Energy storage systems based on flywheels are technologically clean and sustainable solutions that do not employ hazardous materials to produce energy nor do they create these materials during their operation or at the end of their useful life.

The kinetic energy stored in a flywheel is transferred inside and outside the flywheel, by means of an electric generator or motor, as electrical energy. This energy can be used in directly coupled loads or injected into a distribution or transmission grid.

Magnetic levitation flywheels are the most efficient type of flywheel that currently exists, since they have lower losses than electromechanical flywheels. However, the load loss rate over time is much higher compared to other conventional energy storage technologies, due to the fact that the losses inherent in their operation are very high when the device is in standby mode.

Magnetic levitation flywheels are generally found inside a vacuum chamber which allows losses due to air frication to be reduced, contributing to maintaining a more stable load state. This type of losses due to air friction is notably high in relation to the total energy stored by a flywheel, when the nominal rotational speed of the flywheel is very high.

In addition to friction losses in magnetic levitation flywheels, there are losses inherent to the operation of the electric motor/generator associated with the flywheel, and that can be divided into: magnetic and heating losses. The invention disclosed in this patent manages to reduce these considerably.

**Description of the invention**

This invention consists of a retractable modular stator for an electric motor/generator, for example, associated with a flywheel device. The modular stator includes a series of stator sections or modules, moveable in a radial direction or in any other direction that allows the relative position of the stator in relation to the rotor to be changed.

The electric motor/generator is formed by a modular stator divided into n parts with their corresponding windings. The stator windings must be fitted in the stator slots, with one or several winding layers. The division between stator modules can be performed on any part of the slots or on any part for the stator teeth, depending on the configuration of the windings.

The electric motor/generator mainly operates in three modes: load, standby and unload. In load and unload modes the device is functioning with the stator in a closed configuration, which means that the stator modules are in a position near to the rotor. Moreover, depending on the case, it is either supplying or demanding energy to or from the electrical grid.

In standby mode, the device is functioning with the stator in an open configuration, which means that the stator modules are positioned away from the rotor, thus increasing the air gap space between the rotor and the stator.

According to *Bertotti's* theory, the expression of magnetic losses is a function of the frequency and the peak value of the magnetic flux density.

The density of energy is expressed by the equation:

$$dP = C_1 \cdot B_m{}^2 \cdot f + C_2 B_m{}^2 \cdot f^2 + C_3 \cdot B_m^{\frac{3}{2}} \cdot f^{\frac{3}{2}}$$

where $C_1$ is the hysteresis loss coefficient, $C_2$, the eddy current loss coefficient, $C_2$ the additional loss coefficient, $f$ the frequency and $B_m$ the magnetic field in the material.

Total magnetic losses can be divided into three types: hysteresis losses, proportional to $B_m{}^2$, which are the most significant component of low-frequency magnetic losses; eddy current losses that are also proportional to $B_m{}^2$ and additional losses or excess losses, proportional to $B_m^{\frac{3}{2}}$.

The magnetic field ($B_m$) in the ferromagnetic core of the device is reduced when there is an greater air space between the stator and the rotor, reducing the magnetic flux linkage between both parts, due to the increased reluctance of the air gap. Thus, the total magnetic losses occurring in the ferromagnetic core are considerably reduced, to almost zero.

This retractable modular stator for an electric motor/generator affords numerous advantages over the devices currently available, the most significant being the reduction in total magnetic losses.

Another important advantage obtained is that of temperature reduction during its operation. In the presence of a time-varying magnetic field, induced currents or eddy currents occur in all electrical conductors. The presence of these currents is responsible for an increase in temperature in said conductors due to the Joule effect. This increase in temperature causes losses in the conductors due to heating and, hence, a reduction in the efficiency of the motor/generator.

Losses associated with heating are reduced with adequate internal ventilation of the motor/generator. This is achieved by reducing the heat transfer coefficient in the machine's ($h$) air gap. This coefficient is calculated with the following equation:

$$h = \frac{N_u \cdot k_f}{\delta}$$

where $N_u$ is the Nusselt number, $k_f$ is the thermal conductivity of the fluid and $\delta$ the air gap space.

If the machine's air gap space is increased, the air gap heat transfer coefficient is decreased, reducing the operating temperature of the electric machine and the Joule effect losses.

Having a greater air space during standby mode helps to increase the air flow between the rotor and the stator, thus reducing the heat generated in the motor/generator air gap.

The advantage it affords in reducing air friction losses is also noteworthy. In rotors operating at high speed, air friction and resistance can cause losses due to friction that result in a decrease in the efficiency of the device. If the rotor rotates at high speed this causes areas of turbulence, which depend directly on the volume of air in the machine's air gap. These areas of turbulence cause losses due to friction with the air. Hence, a wider area of air reduces the air turbulence created, also reducing losses due to friction.

Finally, it is important to underline the advantage afforded by greater mechanical tolerance in the rotational movement of the electric machine. The fact that there is more air space between the rotor and the stator will allow more free space to make the rotor shaft rotate, which allows greater eccentricity for the rotation shaft movement. This reduces the response time required by the electronic control related to equilibrium in applications in which the rotation shaft is not mechanically coupled to a fixed structure. Furthermore, it allows greater tolerances in the manufacture and operation of the shaft associated with this type of applications, which reduces its cost and prolongs its useful working life.

**Description of the figures**

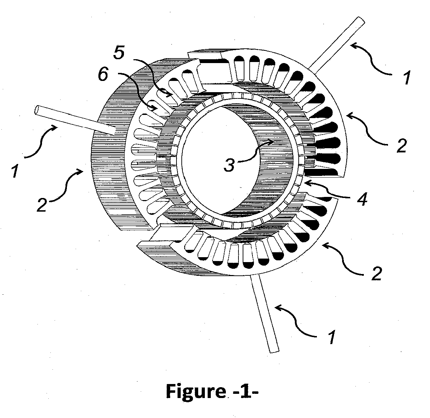

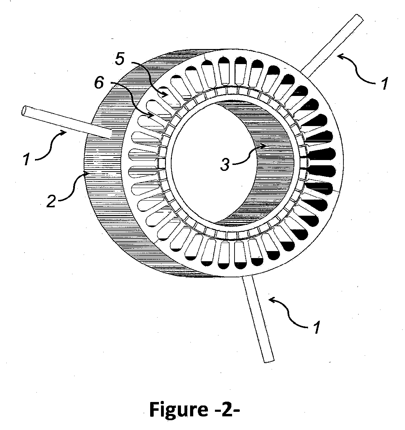

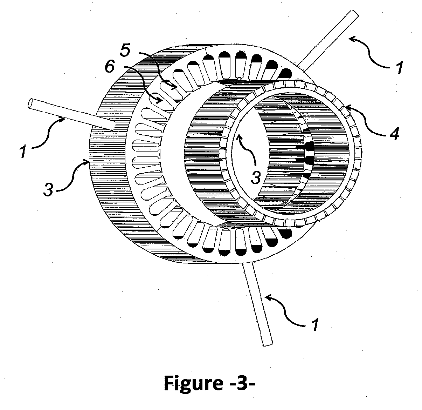

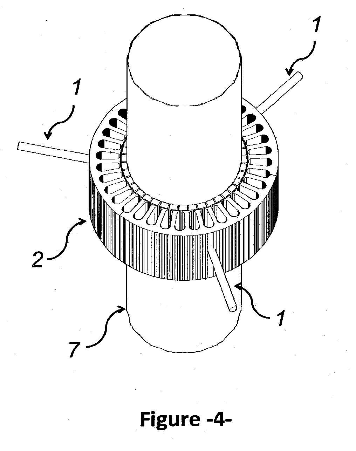

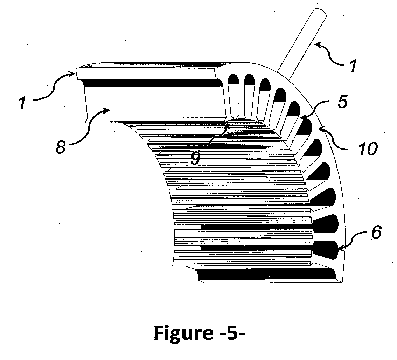

To provide a better understanding of this invention, a preferred practical embodiment of a retractable modular stator for an electric motor/generator is shown in the drawing attached. In said drawing figure - 1- is a perspective view of the permanent magnet motor/generator operating in standby mode.

Figure -2- is a perspective view of the motor/generator operating in load or unload mode.

Figure -3- is a detail view of the permanent magnet motor/generator.

Figure -4- is a perspective view of the permanent magnetic motor/generator coupled to a rotation shaft.

Figure -5- is a perspective view of a modular section of the stator.

These figures show the main elements of the invention, numbered as follows:

- Shift arms (1)

- Stator modules (2)

- Rotor (3)

- Source of magnetic field: permanent magnets (4)

- Stator teeth (5)

- Stator slots (6)

- Shaft (7)

- Division between modules and stator (8)

- Internal shape of the teeth (9)

- Stator yoke (10)

**Preferred embodiment of the invention**

The present invention consists of a retractable modular stator for an electric motor/generator, in this particular case the application is a motor/generator to transfer kinetic energy from or towards a flywheel device as shown in figure -3-. The stator includes a series of stator modules (2) and a series of shift arms (1), the stator modules (2) being moveable in a radial direction or in any other direction by means of the shift arms (1), to increase the air space between the stator and the rotor (3). Each module of the stator (2) consists of several windings, teeth (5), slots (6) and its corresponding yoke section.

The electric motor/generator is an electric machine with a modular stator divided into *n* modules (2) with their corresponding windings. The stator windings must be positioned in the slots with one or several winding layers. The division between the stator modules (2) can be performed on any part of the slot (6) or on any part for the stator teeth (5), depending on the configuration of the winding.

Each stator module (2) comprises at least one shift arm (1) associated with some means of movement. The means of movement may be electrical, mechanical, pneumatic, hydraulic or any other system of movement.

The rotor (3) is linked mechanically to a shaft (7) and, for the example shown, is formed by a series of permanent magnets although it could be any other type of electric machine.

The electric motor/generator can operate in three different modes: load, standby and unload.

In load and unload modes the device demands or supplies energy from/to the electricity grid respectively, operating with the stator in a closed configuration, with the stator modules (2) positioned near to the rotor (3), reducing the air space, as shown in figure -4-.

In standby mode, the device functions with the stator in an open configuration, with the stator modules (2) positioned away from the rotor (3), increasing the air space, as shown in figure -1-, thus minimising magnetic losses.

If the device has a certain amount of kinetic energy stored and there is no need to transfer the energy from or towards the flywheel, this means that the flywheel is functioning in standby mode. In this operating mode the stator modules (2) move away from the rotor in a radial direction and a greater air space is created between the rotor (3) and the stator (2). The magnetic flux lines flowing through the ferromagnetic parts of the device become weaker, significantly reducing losses. This topology of retractable motors or generators with low losses in standby mode allows a significant reduction of losses in flywheels when operating as energy storage systems.

There are two possible uses or applications of the invention:

**Electric vehicles**

An electric vehicle is driven by one or more electric motors. Traction can be provided by wheels or propellers driven by rotation motors, or in other cases, by using another type of non-rotation motor, such as linear motors, inertia motors, or magnetic applications as the source of propulsion, as is the case of magnetic levitation trains.

All types of vehicles tend to remain in standby mode for a long time. During this time the motor/generator shaft is moving but without an electrical load. This means that there is a notable loss of stored energy due to the efficiency of the motor/generator in a no-load state. The fact of considering a modular retractable stator reduces magnetic losses in a no-load state, improving the efficiency of the electric motor/generator.

**Clutches**

Clutches are used whenever energy transmission or movement has to be limited or controlled in terms of amount or time, depending on the need.

In the simplest applications the clutches used have two rotating shafts. In these devices, one shaft is normally connected to a motor or an energy unit (the motor element), while the other shaft (the traction element) provides the output power for the work to be performed.

Typical mechanical clutches can be replaced by machines with a modular stator design in which the transmission of energy depends on the distance between the rotor and the stator.

### Escalator

An escalator is a transport device that is driven by a motor, allowing masses to be moved from one place to another.

This type of equipment remains in standby mode for long periods of time to reduce the power consumed when the device is not being used. The present invention increases the efficiency of motors associated with these uses during the time they are operating in standby mode.

### Lifts

Generally lifts are driven by electric motors that move traction cables or counterweight systems.

This type of equipment remains in standby mode for long periods of time to reduce the power consumed when the device is not being used. The present invention increases the efficiency of motors associated with these uses during the time they are operating in standby mode.

### Claims

1. Retractable modular stator for an electric motor/generator, **characterised in that** it is divided into a series of modules (2), each one having at least one shift arm (1), the stator modules (2) being moveable in a radial direction or in any other possible direction which allows the separation between the rotor and the stator to be varied by means of said shift arms (1) to increase or reduce the air gap space between the stator and the rotor (3).

2. Retractable modular stator for an electric motor/generator, according to the preceding claim wherein each stator module (2) is formed by several windings, teeth (5), slots (6) and their corresponding section of the stator yoke, the winding of the stator being of one or several layers, the division between the stator modules (2) being able to be made on any place of the slot (6) or on any place of the stator teeth (5), depending on the winding configuration.

3. Retractable modular stator for an electric motor/generator, according to the preceding claims, wherein the shift arm or arms (1) associated with each stator module (2) have some means of movement.

4. Operating procedure of a retractable modular stator for an electric motor/generator according to preceding claims 1 to 3, wherein the stator modules (2) are moved depending on the load, by means of the shift arms (1) and their associated means of movement, varying the air gap space between the stator and the rotor (3).

5. Operating procedure of a retractable modular stator for an electric motor/generator, according to claim 4, wherein when in standby mode the device is functioning with the stator in an open configuration, with the stator modules (2) positioned away from the rotor (3), increasing the air gap space between the stator and the rotor (3), minimising in this way magnetic losses, friction and heating.

6. Operating procedure of a retractable modular stator for an electric motor/generator, according to claim 4, wherein in load and unload mode the device is functioning with the stator in a closed configuration, with the stator modules (2) positioned near to the rotor (3), reducing the air gap space between the stator and the rotor (3), transferring energy from/towards the electricity grid.

7. Use of a retractable modular stator for an electric motor/generator, as described in the preceding claims, in electric motors or generators with a standby mode in which the unit is rotating with no load (idling) or with minimum load.

8. Use of a retractable modular stator for an electric motor/generator, according to claim 7, in which the electric motor/generator is used to transfer kinetic energy from or towards a flywheel.

9. Use of a retractable modular stator for an electric motor/generator, according to claim 7 in which the electric motor/generator forms part of an electric vehicle.

10. Use of a retractable modular stator for an electric motor/generator, according to claim 7 in which the electric motor/generator forms part of a clutch.

11. Use of a retractable modular stator for an electric motor/generator, according to claim 7 in which the electric motor/generator forms part of an escalator.

12. Use of a retractable modular stator for an electric motor/generator, according to claim 7 in which the electric motor/generator forms part of a lift.

**Figure -1-**

**Figure -2-**

**Figure -3-**

**Figure -4-**

**Figure -5-**

# INTERNATIONAL SEARCH REPORT

| International application No. |
| --- |
| PCT/ES2011/070787 |

**A. CLASSIFICATION OF SUBJECT MATTER**

**See extra sheet**

According to International Patent Classification (IPC) or to both national classification and IPC

**B. FIELDS SEARCHED**

Minimum documentation searched (classification system followed by classification symbols)
H02K

Documentation searched other than minimum documentation to the extent that such documents are included in the fields searched

Electronic data base consulted during the international search (name of data base and, where practicable, search terms used)

EPODOC, INVENES, NPL

**C. DOCUMENTS CONSIDERED TO BE RELEVANT**

| Category* | Citation of document, with indication, where appropriate, of the relevant passages | Relevant to claim No. |
| --- | --- | --- |
| X | 22.12.1997, Retrieved from EPODOC, DataBase EPOQUE; PN JP9331660 & JP9331660 A (TOYODA AUTOMATIC LOOM WORKS) 22.12.1997; Abstract; figures. | 1,3-7 |
| Y | | 2 |
| A | | 8-12 |
| Y | US 5844341 A (SECRETARY TRADE IND BRIT) 01.12.1998, column 4, lines 16-52; abstract; figure 3 | 2 |
| A | | 1,3-12 |
| A | WO 0060719 A1 (BONUS ENERGY AS ET AL) 12.10.2000, Page 7, line 23- Page 8, line 27; figures | 1-7 |
| A | WO 2011033370 A1 (UNIV STELLENBOSCH ET AL) 24.03.2011, Page 9, line 15- page 10, line 30; figure 1 | 1 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
| --- | --- |
| 13/07/2012 | **(18/07/2012)** |
| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>L. García Aparicio<br><br>Telephone No. 91 3493057 |

Form PCT/ISA/210 (second sheet) (July 2009)

## INTERNATIONAL SEARCH REPORT

Information on patent family members

| | International application No. |
|---|---|
| | PCT/ES2011/070787 |

| Patent document cited in the search report | Publication date | Patent family member(s) | Publication date |
|---|---|---|---|
| JP9331660 A | 22.12.1997 | NONE | |
| US5844341 A | 01.12.1998 | CA2124660 A | 04.12.1994 |
| | | GB2278738 AB | 07.12.1994 |
| | | EP0627805 AB | 07.12.1994 |
| | | EP19940303660 | 23.05.1994 |
| | | JP7075311 A | 17.03.1995 |
| | | DK0627805 T | 20.01.1997 |
| | | ES2095718 T | 16.02.1997 |
| | | DE69401241 T | 22.05.1997 |
| WO0060719 A | 12.10.2000 | DK165599 A | 01.10.2000 |
| | | DK173641 B | 14.05.2001 |
| | | AU3551200 A | 23.10.2000 |
| | | EP1173915 AB | 23.01.2002 |
| | | EP20000914063 | 31.03.2000 |
| | | US6781276 B | 24.08.2004 |
| | | AT489759 T | 15.12.2010 |
| | | EP2273652 A | 12.01.2011 |
| | | EP20100011184 | 31.03.2000 |
| | | ES2353852 T | 07.03.2011 |
| | | DK1173915 T | 07.03.2011 |
| WO2011033370 A | 24.03.2011 | NONE | |

Form PCT/ISA/210 (patent family annex) (July 2009)

**INTERNATIONAL SEARCH REPORT**

International application No.

PCT/ES2011/070787

**CLASSIFICATION OF SUBJECT MATTER**

*H02K1/18* (2006.01)
*H02K17/30* (2006.01)
*H02K1/16* (2006.01)

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6288470 B1
- US 20040160141 A1
- WO 2011109659A1 A
- WO 2011033370A1 A

### Non-patent literature cited in the description

- **Y. CHEN ; Z. DU ; W. ZHONG ; L. KONG.** Modular Stator Structure Permanent Magnet Synchronous Machine. *World Automation Congress,* 2008
- **S. CHUNG ; JI-WON KIM ; BYUNG-CHULWOO ; DO-KWAN HONG ; JI-YOUNG LEE ; DAE-HYUNK-OO.** A Novel Design Of Modular Three-Phase Permanent Magnet Vernier Machine Witch Consequent Pole Rotor. *IEEE Transactions On Magnetics,* vol. 47, 4215-4218